# EUROPÄISCHE PATENTANMELDUNG

(11) **EP 2 769 789 A2**
(43) Veröffentlichungstag der Anmeldung: **27.08.2014**
(21) Anmeldenummer: 14151968.6
(22) Anmeldetag: 21.01.2014
(51) Int. Cl.: B23B 45/02, B23B 31/12

(54) **Bohrvorrichtung**

(30) Priorität: 20.02.2013 DE 102013101679
(71) Anmelder: Röhm GmbH, 89567 Sontheim/Brenz (DE)
(72) Erfinder: Schenk, Peter, 89168 Niederstotzingen (DE)
(74) Vertreter: Hentrich, Swen

(57) **Zusammenfassung**

Die Erfindung ist eine Bohrvorrichtung, bestehend aus einer einen Motor aufweisenden Bohrmaschine, die eine in einem Maschinengehäuse (1) drehbar gelagerte Bohrspindel (2) aufweist, und einem Bohrfutter mit einem Futterkörper (3), in dem mittels einer zwischen einem Gewindeglied (4) und einem Gewindegegenglied (5) ausgebildeten Gewindeverbindung (6) verstellbare Spannbacken (7) geführt sind und eine mit dem Gewindegegenglied (5) drehfest verbundene und mittels des Motors antreibbare Antriebshülse (8) vorgesehen ist. Der Motor ist als bürstenloser Gleichstrommotor (26) mit einer Motorsteuerung (28) gebildet, die über eine Sensorleitung (30) mit einem Sensor (29) zur Erfassung des Betriebszustandes verbunden ist, wobei in Abhängigkeit des vom Sensor erfassten Betriebszustandes mittels der Motorsteuerung (28) mindestens ein Motorparameter veränderbar ist.

## Beschreibung

Die Erfindung betrifft eine Bohrvorrichtung, bestehend aus einer einen Motor aufweisenden Bohrmaschine, die eine in einem Maschinengehäuse drehbar gelagerte Bohrspindel aufweist, und einem Bohrfutter mit einem Futterkörper, in dem mittels einer zwischen einem Gewindeglied und einem Gewindegegenglied ausgebildeten Gewindeverbindung verstellbare Spannbacken geführt sind und eine mit dem Gewindegegenglied drehfest verbundene und mittels des Motors antreibbare Antriebshülse vorgesehen ist.

Eine Bohrvorrichtung der eingangs genannten Art ist aus der DE 10 2011 002 331 A1 bekannt. Die darin offenbarte Bohrvorrichtung kann zwischen den Betriebsmodi "Spannen/Lösen" und "Bohren" umgeschaltet werden, wobei in beiden Betriebsmodi durch den Motor das gleiche Drehmoment erzeugt und auf die Bohrspindel übertragen wird. Dies ist allerdings im Betriebsmodus "Spannen/Lösen" nachteilig, weil sowohl beim Auflaufen der Spannbacken auf das Bohrwerkzeug als auch beim Verstellen der Spannbacken in die maximale Öffnungsweite die volle Drehzahl und das volle Drehmoment wirkt und somit die mechanischen Komponenten sehr stark belastet werden. Aus der nicht vorveröffentlichten DE 10 2011 055 869 ist daher in einer Weiterentwicklung der zuvor genannten Bohrvorrichtung die Möglichkeit geschaffen, in unterschiedlichen Betriebsmodi unterschiedliche Drehmomentenbelastungen zu ermöglichen, wobei dies auf mechanischem Wege erreicht ist, was allerdings einen deutlich höheren Aufwand bei der Konstruktion und Fertigung der Bohrvorrichtung erfordert.

Der Erfindung liegt daher die Aufgabe zugrunde, eine Bohrvorrichtung der eingangs genannten Art so auszubilden, dass mit geringem konstruktivem Aufwand eine unterschiedliche Drehmomentenbelastung der Bohrvorrichtung in unterschiedlichen Betriebsmodi ermöglicht ist.

Diese Aufgabe wird nach der Erfindung bei einer Bohrvorrichtung der eingangs genannten Art dadurch gelöst, dass der Motor als bürstenloser Gleichstrommotor mit einer Motorsteuerung gebildet ist, die über eine Sensorleitung mit einem Sensor zur Erfassung des Betriebszustandes verbunden ist, und dass in Abhängigkeit des vom Sensor erfassten Betriebszustandes mittels der Motorsteuerung mindestens ein Motorparameter veränderbar ist.

Bürstenlose Gleichstrommotoren sind aus dem Stand der Technik als Variante des Gleichstrommotors bekannt, bei dem der sonst übliche mechanische Kommutator mit Bürsten zur Stromwendung durch eine elektronische Schaltung ersetzt ist. Der Einsatz eines derartigen bürstenlosen Gleichstrommotors bietet eine elegante Möglichkeit zur Lösung der Aufgabe gezielt in die Motorsteuerung einzugreifen, so dass im Prinzip bei grundsätzlich unverändertem Aufbau der eingangs geschilderten Bohrvorrichtung eine Überlastung von deren Bauteilen im Betriebsmodus "Spannen/Lösen" durch die sensorische Erfassung dieses Betriebsmodus mit der geeigneten Ansteuerung des Motors verhindert ist. Bevorzugt ist dabei im Rahmen der Erfindung, dass der Sensor zur Erfassung der Lage eines den Betriebszustand schaltenden und/oder anzeigenden Stellgliedes ausgestaltet, wobei dies berücksichtigt, dass ein Wechsel des Betriebszustandes willentlich durch den Nutzer bewirkt werden muss mittels eines geeigneten Stellgliedes, dessen Lage dazu durch den Sensor ausgewertet werden kann, also insbesondere der Sensor ausgestaltet ist, zwischen einer dem Öffnen und Schließen der Spannbacken dienenden Spannkonfiguration und eine dem Bohrbetrieb dienenden Bohrkonfiguration zu unterscheiden. Dabei ist im Rahmen der Erfindung vorgesehen, dass die Motorsteuerung geeignet ist, in Abhängigkeit des vom Sensor erfassten Betriebszustandes das Drehmoment und/oder die Motordrehzahl zu verändern.

Eine hinsichtlich der Einfachheit des konstruktiven Aufbaus wegen bevorzugte Ausführungsform ist dadurch gekennzeichnet, dass zwischen dem Gleichstrommotor und der Antriebshülse ein Planetengetriebe vorgesehen ist, das ein durch den Gleichstrommotor antreibbares Sonnenrad aufweist, das mit mindestens einem auf einer mit der Antriebshülse verbundenen Planetenträger gelagerten Planetenrad im Eingriff steht, das seinerseits mit einem dem Maschinengehäuse zugeordneten Hohlrad zusammenwirkt.

Wenn das Gewindegegenglied zweiteilig aus einer Gewindehülse und einer mit dieser drehfest verbundenen, axial verstellbaren Kupplungsstange gebildet und in der als Maschinenhohlspindel gebildeten Bohrspindel geführt ist, wenn die Kupplungsstange ein Kupplungsstirnrad und die Maschinenhohlspindel ein Spindelstirnrad aufweisen, und wenn die Antriebshülse und gegebenenfalls das Getriebe axial verstellbare Maschinengehäuse gelagert ist, ist eine konstruktiv einfache Möglichkeit geschaffen, eine Drehmoment übertragende Verbindung zwischen der Antriebshülse und der Maschinenhohlspindel bzw. der Kupplungsstange herzustellen.

Eine besonders bevorzugte Ausführungsform ist dadurch gekennzeichnet, dass die Antriebshülse eine Innenverzahnung aufweist und reversibel von der Spannkonfiguration, in welcher das Kupplungsstirnrad in Eingriff mit der Innenverzahnung steht, in die Bohrkonfiguration, in welcher das Kupplungsstirnrad und das Spindelstirnrad im Eingriff mit der Innenverzahnung stehen, überführbar ist. In der Spannkonfiguration steht das Spindelstirnrad im Eingriff mit dem Hohlrad, wodurch die Maschinenhohlspindel drehfest mit dem Maschinengehäuse und dem Futterkörper verbunden ist. Die relative Verdrehung der Kupplungsstange bezüglich der Maschinenhohlspindel ist gewährleistet. Die Bohrvorrichtung kann sehr einfach durch die axiale Verstellung der Antriebshülse zwischen der Spannkonfiguration und der Bohrkonfiguration hin- und hergeschaltet werden. Auch ist hier durch den Antrieb des Kupplungsstirnrads und des Spindelstirnrads mittels der Antriebshülse eine Relativdrehung des Gewindeglieds relativ zum Gewindegegenglied verhindert.

Als günstig hat es sich weiterhin erwiesen, wenn dem Maschinengehäuse eine die axiale Verstellung des Getriebes und der Antriebshülse bewirkende Stellhülse zugeordnet ist, wobei dann bevorzugt im Rahmen der Erfindung der Sensor zur Erfassung der Lage der Antriebshülse und/oder der Stellhülse ausgestaltet ist.

Im folgenden wird die Erfindung an einem in der Zeichnung dargestellten Ausführungsbeispiel näher erläutert; es zeigen:
- Fig. 1: einen Längsschnitt der Bohrvorrichtung in Spannkonfiguration,
- Fig. 1a: den Schnitt 1 a - 1 a aus Figur 1,
- Fig. 2: die Bohrvorrichtung aus Figur 1 in Bohrkonfiguration,
- Fig. 3: den Schnitt III - III aus Figur 2, und
- Fig. 4: eine schematische Ansicht einer einen bürstenlosen Gleichstrommotor aufweisenden Bohrvorrichtung mit geeigneter Motorsteuerung.

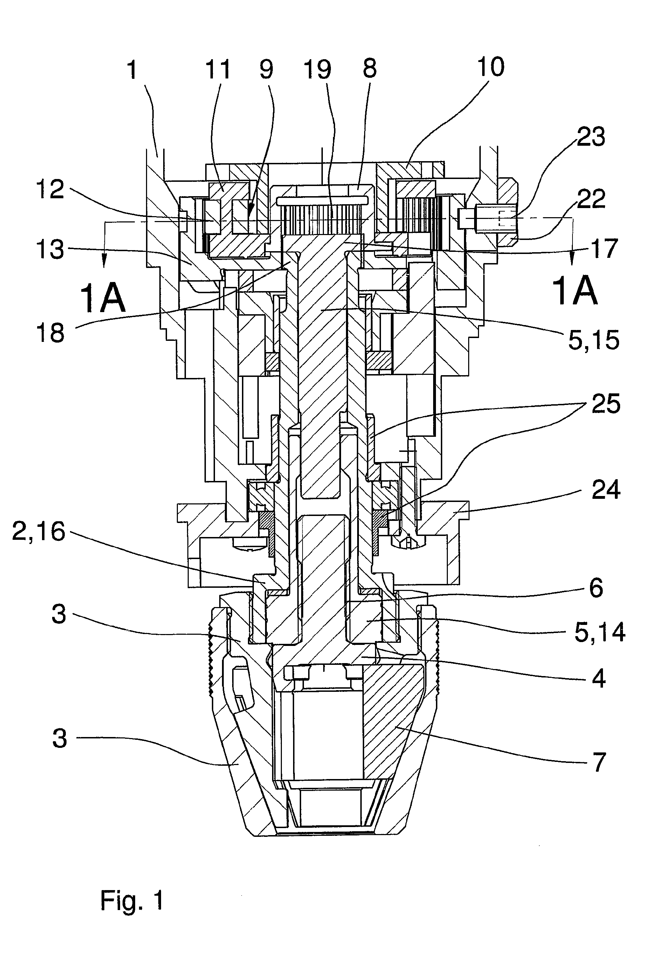

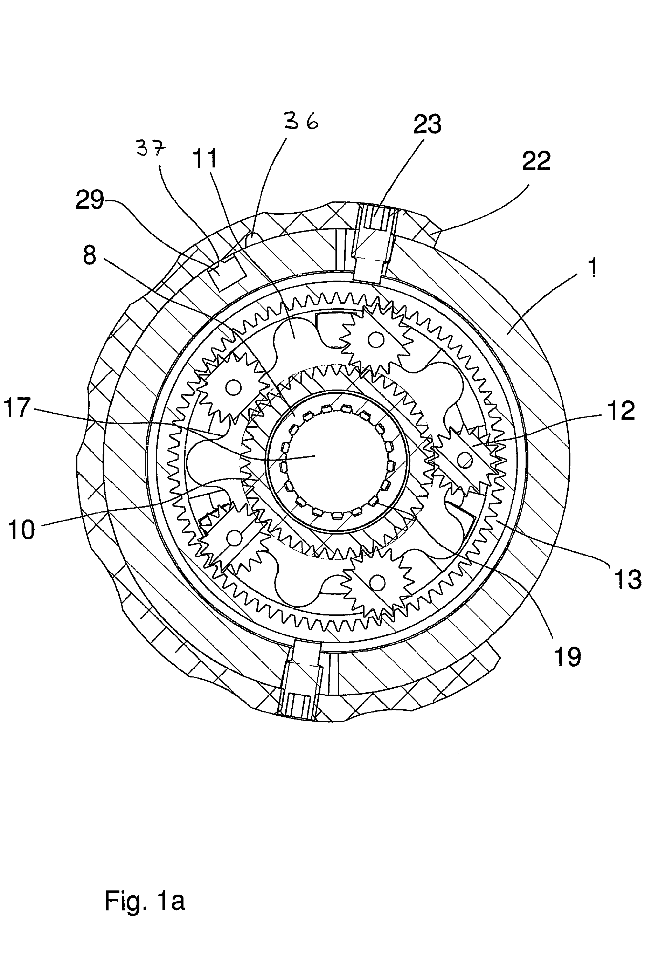

In der Zeichnung ist eine Bohrvorrichtung gezeigt, bestehend aus einer einen Motor aufweisenden Bohrmaschine, die eine in einem Maschinengehäuse 1 drehbar gelagerte Bohrspindel 2 aufweist, und einem Bohrfutter mit einem Futterkörper 3, in dem mittels einer zwischen einem Gewindeglied 4 und einem Gewindegegenglied 5 ausgebildeten Gewindeverbindung 6 verstellbare Spannbacken 7 geführt sind. Bei der Bohrvorrichtung ist eine mit dem Gewindegegenglied drehfest verbundene und mittels des Motors antreibbare Antriebshülse 8 vorgesehen. Zwischen dem Motor und der Antriebshülse 8 ist ein Planetengetriebe 9 angeordnet, welches ein durch den Motor antreibbares Sonnenrad 10 aufweist. Die Figuren 1 a und 3 zeigen dabei, dass im gezeigten Ausführungsbeispiel genau 5 Planetenräder 12 auf dem mit der Antriebshülse 8 verbundenen Planetenträger 11 gelagert sind, die mit dem Sonnenrad 10 und dem Hohlrad 13 im Eingriff stehen. Es ist dabei darauf hinzuweisen, dass im Rahmen der Erfindung auch mehr oder weniger Planetenräder 12 eingesetzt werden können.

Das Gewindegegenglied 5 ist zweiteilig aus einer Gewindehülse 14 und einer mit dieser drehfest verbundenen, axial verstellbaren Kupplungsstange 15 gebildet und in der als Maschinenhohlspindel 16 gebildeten Bohrspindel 2 geführt. Die Kupplungsstange 15 weist ein Kupplungsstirnrad 17 und die Maschinenhohlspindel 16 ein Spindelstirnrad 18 auf. Das Planetengetriebe 9 und die Antriebshülse 8 sind axial verstellbar im Maschinengehäuse 1 gelagert, wobei eine dem Maschinengehäuse 1 zugeordnete Stellhülse 22 vorhanden ist, die die axiale Verstellung des Planetengetriebes 9 und der Antriebshülse 8 bewirkt. Hierzu weist die Stellhülse 22 ein mit dem Hohlrad 13 wechselwirkendes Stellelement 23 auf. Axial vorn liegend ist dem Maschinengehäuse 1 eine lösbar mit diesem verbundene Abdeckkappe 24 zugeordnet. Zwischen der Bohrspindel 2 und dem Maschinengehäuse 1 sind mehrere Lagerungen 25 vorgesehen.

In Figur 1 ist die Ausführungsform in der Spannkonfiguration gezeigt, in der die Innenverzahnung 19 der Antriebshülse 8 im Eingriff mit dem Kupplungsstirnrad 17 steht und das Spindelstirnrad 18 mit dem nicht umlaufenden Hohlrad 13 verzahnt ist. Hier wird die Kraft des Motors über die Maschinenspindel auf das Sonnenrad 10 des Planetengetriebes 9 übertragen. Dieses treibt die auf dem Planetenträger 11 gelagerten Planetenräder 12 an, welche auf dem drehfest mit dem Maschinengehäuse 1 verbundenen Hohlrad 13 abrollen. Die drehfest mit dem Planetenträger 11 verbundene Antriebshülse 8 überträgt die Kraft ihrerseits auf das Kupplungsstirnrad 17, wodurch die Kupplungsstange 15 und die Gewindehülse 14 angetrieben werden. Da das Spindelstirnrad 18 und damit die Maschinenhohlspindel 16 drehfest mit dem Maschinengehäuse 1 über das Hohlrad 13 verbunden ist, ist eine Relativdrehung der Gewindehülse 14 bezüglich der Maschinenhohlspindel 16 ermöglicht und das Gewindegegenglied 5 wird über die Gewindeverbindung 6 axial nach vorn, also in einer dem Motor abgewandten Richtung, bzw. axial nach hinten, unter der Mitnahme der Spannbacken 7 verstellt.

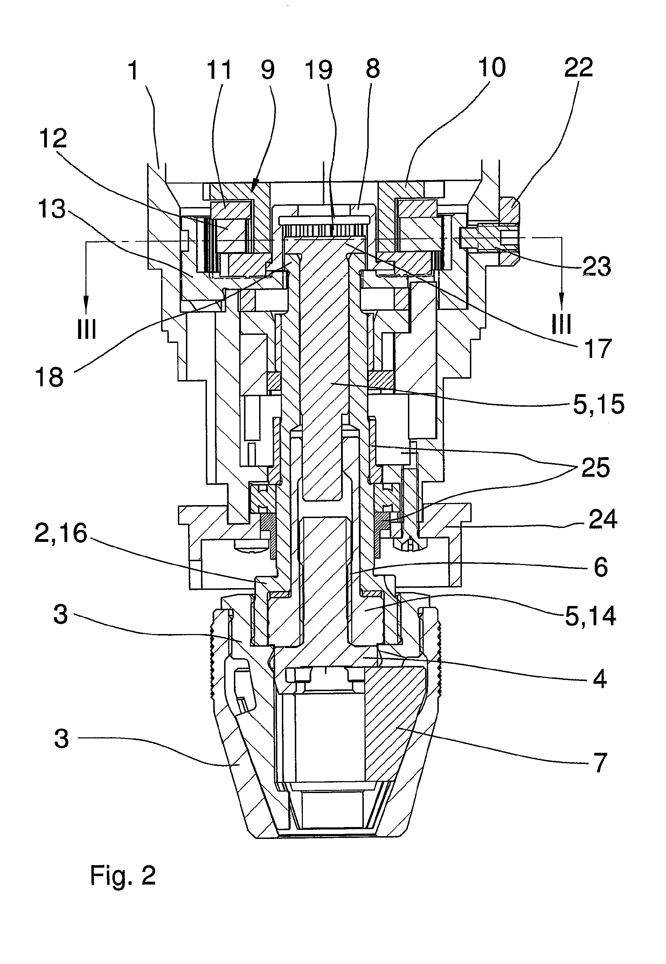

Figur 2 zeigt die Ausführungsform in der Bohrkonfiguration, in der die Antriebshülse 8 und das Planetengetriebe 9 axial nach vorn verschoben sind, wobei das Kupplungsstirnrad 17 und das Spindelstirnrad 18 im Eingriff mit der Innenverzahnung 19 der Antriebshülse 8 stehen. Auch hier wird die Kraft des Motors auf das Sonnenrad 10 des Planetengetriebes 9 übertragen. Dieses treibt die auf dem Planetenträger11 gelagerten Planetenräder 12 an, welche auf dem drehfest mit dem Maschinengehäuse 1 verbundenen Hohlrad 13 abrollen. Hier ist die Antriebshülse 8 durch die Verstellung der Stellhülse 22 axial nach vorn versetzt. Die Antriebshülse 8 wird vom Planetengetriebe 9 mitgenommen und ist nun drehfest mit der Kupplungsstange 15 und mit der Maschinenhohlspindel 16 über den Eingriff des Kupplungsstirnrads 17 und des Spindelstirnrads 18 mit der Innenverzahnung 19 der Antriebshülse 8 verbunden, womit die Kraft des Motors direkt auf die Kupplungsstange 15 und die Maschinenhohlspindel 16 übertragen wird. Somit ist eine Relativdrehung der Gewindehülse 14 bezüglich der Maschinenhohlspindel 16 und damit die Verstellung der Spannbacken 7 ausgeschlossen.

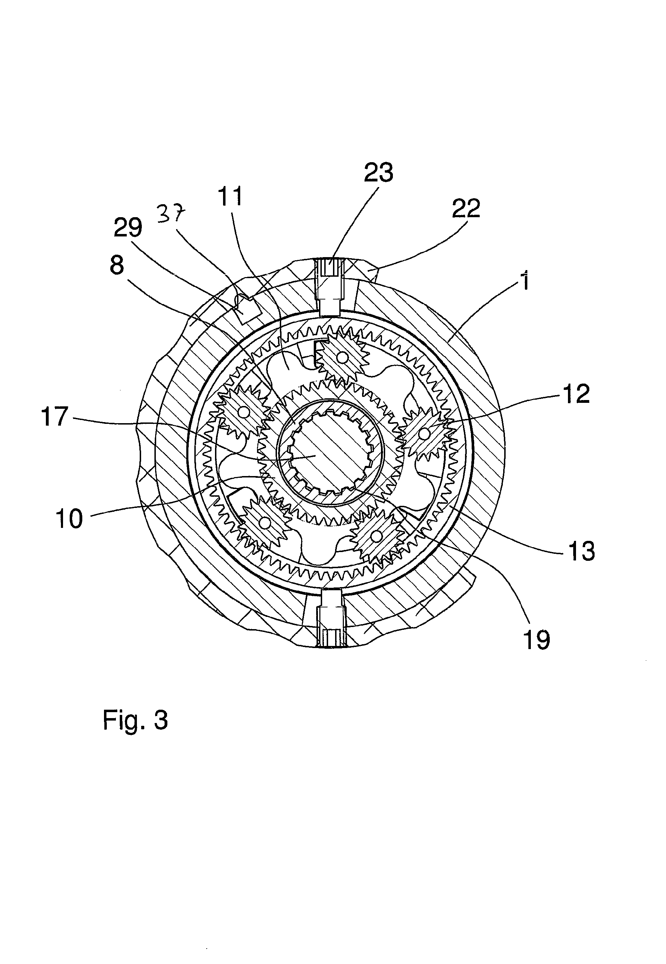

Erfindungsgemäß ist bei einer derartigen Bohrvorrichtung der Motor als bürstenloser Gleichstrommotor 26 mit einer Motorsteuerung 28 gebildet, die über eine Sensorleitung 30 mit einem Sensor 29 zur Erfassung des Betriebszustandes verbunden ist. Dabei ist in Abhängigkeit des vom Sensor 29 erfassten Betriebszustandes mittels der Motorsteuerung 28 mindestens ein Motorparameter veränderbar. Der Sensor 29 unterscheidet dabei zwischen der Spannkonfiguration und der Bohrkonfiguration, indem gemäß dem in der Zeichnung dargestellten Ausführungsbeispiel die Lage der Stellhülse 22 erfasst wird, die in der Figur 1a in der Spannkonfiguration und in der Figur 3 in der Bohrkonfiguration dargestellt ist. Die Unterscheidung ist in einfacher Weise ermöglicht, indem der Sensor 29 mit einem Sensordorn 37 je nach Drehlage der Stellhülse 22 die Präsenz oder das Fehlen einer Ausnehmung 36 in der Stellhülse 22 erfasst. Alternativ ist es gleichfalls denkbar, dass der Sensor 29 zur Erfassung der Lage der Antriebshülse 8 relativ zu dem Spindelstirnrad 18 geeignet ist, jedoch erfordert dies eine Platzierung des Sensors 29 an einer unzugänglicheren Stellung gegenüber einer Auswertung der Lage der Stellhülse 22.

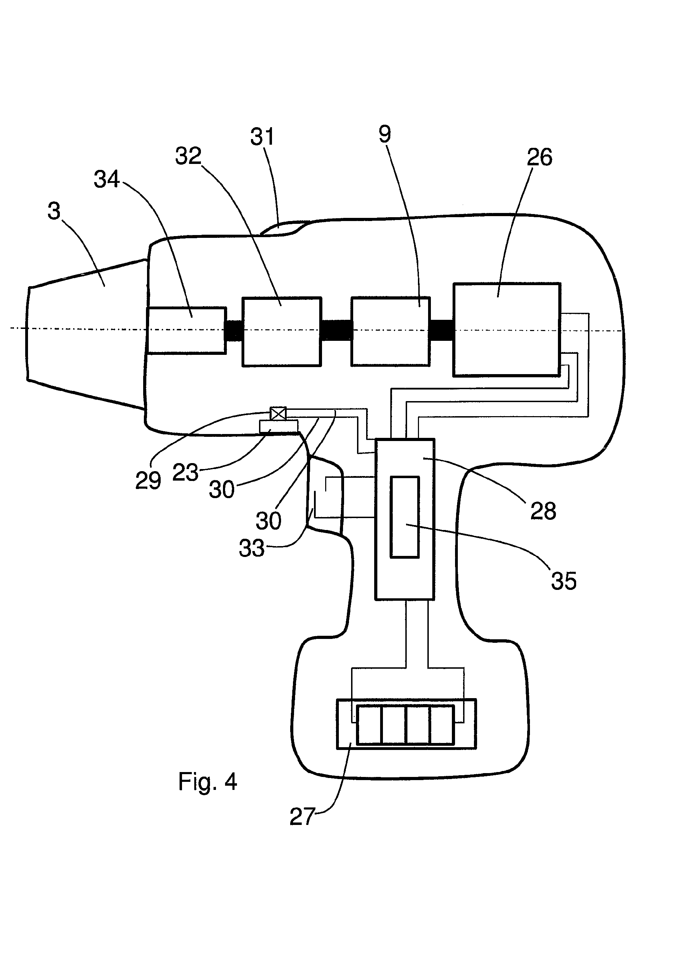

Durch die Erfindung wird damit bei der in Figur 4 schematisch dargestellten Bohrvorrichtung die Lage eines mechanischen Stellgliedes ausgewertet, das die verschiedenen Betriebsmodi abbilden kann, wobei in Abhängigkeit der vom Sensor 29 ermittelten Daten in die Motorsteuerung 28 eingegriffen wird, um in der Bohrkonfiguration das volle Drehmoment und die maximale Drehzahl bereitzustellen, während in der Spannkonfiguration das Drehmoment und/oder die Drehzahl reduziert werden können. Es erfolgt damit keine mechanische Auskupplung bzw. keine Unterbrechung des Kraftflusses beim Kuppeln, die nur mit einem hohen konstruktiven Aufwand erreichbar ist; vielmehr wird die Bohrspindel 2 über die Motorsteuerung 28 beim Erreichen des voreingestellten Drehmoments gestoppt, so dass auf diese Art eine Drehmomentbegrenzung erzielt ist. Die Drehmomentbegrenzung muss dabei für das Spannen und Lösen nicht den gleichen Wert aufweisen, so dass eine Erhöhung des dem Lösen dienenden Drehmoments als Öffnungsreserve denkbar ist.

Die Erfindung ist auch mit der in der DE 10 2011 055 869 beschriebenen Bohrvorrichtung kombinierbar, auf deren Offenbarungsgehalt zur Erläuterung der mechanischen Drehmomentenbegrenzung als Ergänzung der elektronischen Drehmomentenbegrenzung verwiesen wird.

Zu erwähnen ist noch, dass der bürstenlose Gleichstrommotor 26 vorzugsweise durch einen Akkumulator 27 mit Gleichstrom versorgt wird, wobei jedoch bei einer kabelgebundenen, an das Stromnetz anschließbaren Bohrvorrichtung die Erfindung gleichfalls einsetzbar ist, sofern eine Gleichrichteranordnung zum Umwandeln der Wechselspannung in eine Gleichspannung bereitgestellt ist.

### Bezugszeichenliste

- 1: Maschinengehäuse
- 2: Bohrspindel
- 3: Futterkörper
- 4: Gewindeglied
- 5: Gewindegegenglied
- 6: Gewindeverbindung
- 7: Spannbacken
- 8: Antriebshülse
- 9: Planetengetriebe
- 10: Sonnenrad
- 11: Planetenträger
- 12: Planetenrad
- 13: Hohlrad
- 14: Gewindehülse
- 15: Kupplungsstange
- 16: Maschinenhohlspindel
- 17: Kupplungsstirnrad
- 18: Spindelstirnrad
- 19: Innenverzahnung
- 20: Zahnkranz
- 21: Spindelzahnkranz
- 22: Stellhülse
- 23: Stellelement
- 24: Abdeckkappe
- 25: Lagerung
- 26: Gleichstrommotor
- 27: Akkumulator
- 28: Motorsteuerung
- 29: Sensor
- 30: Sensorleitung
- 31: Wählschalter
- 32: Kupplung
- 33: Betätigungsschalter
- 34: Steuerglied Spannfunktion
- 35: Steuereinrichtung
- 36: Ausnehmung
- 37: Sensordorn

## Patentansprüche

1. Bohrvorrichtung, bestehend aus einer einen Motor aufweisenden Bohrmaschine, die eine in einem Maschinengehäuse (1) drehbar gelagerte Bohrspindel (2) aufweist, und einem Bohrfutter mit einem Futterkörper (3), in dem mittels einer zwischen einem Gewindeglied (4) und einem Gewindegegenglied (5) ausgebildeten Gewindeverbindung (6) verstellbare Spannbacken (7) geführt sind und eine mit dem Gewindegegenglied (5) drehfest verbundene und mittels des Motors antreibbare Antriebshülse (8) vorgesehen ist, **dadurch gekennzeichnet, dass** der Motor als bürstenloser Gleichstrommotor (26) mit einer Motorsteuerung (28) gebildet ist, die über eine Sensorleitung (30) mit einem Sensor (29) zur Erfassung des Betriebszustandes verbunden ist, und dass in Abhängigkeit des vom Sensor erfassten Betriebszustandes mittels der Motorsteuerung (28) mindestens ein Motorparameter veränderbar ist.

2. Bohrvorrichtung nach Anspruch 1, **dadurch gekennzeichnet, dass** der Sensor (29) zur Erfassung der Lage eines den Betriebszustand schaltenden und/oder anzeigenden Stellgliedes ausgestaltet ist.

3. Bohrvorrichtung nach Anspruch 1 oder 2, **dadurch gekennzeichnet, dass** der Sensor(29) ausgestaltet ist, zwischen einer dem Öffnen und Schließen der Spannbacken (7) dienenden Spannkonfiguration und eine dem Bohrbetrieb dienenden Bohrkonfiguration zu unterscheiden.

4. Bohrvorrichtung nach einem der Ansprüche 1 bis 3, **dadurch gekennzeichnet, dass** die Motorsteuerung (28) geeignet ist, in Abhängigkeit des vom Sensor (29) erfassten Betriebszustandes das Motordrehmoment und/oder die Motordrehzahl zu verändern.

5. Bohrvorrichtung nach einem der Ansprüche 1 bis 4, **dadurch gekennzeichnet, dass** zwischen dem Gleichstrommotor (26) und der Antriebshülse (8) ein Planetengetriebe (9) vorgesehen ist, das ein durch den Gleichstrommotor (26) antreibbares Sonnenrad (10) aufweist, das mit mindestens einem auf einem mit der Antriebshülse (8) verbundenen Planetenträger (11) gelagerten Planetenrad (12) im Eingriff steht, das seinerseits mit einem dem Maschinengehäuse (1) zugeordneten Hohlrad (13) zusammenwirkt.

6. Bohrvorrichtung nach einem der Ansprüche 1 bis 5, **dadurch gekennzeichnet, dass** das Gewindegegenglied (5) zweiteilig aus einer Gewindehülse (14) und einer mit dieser drehfest verbundenen, axial verstellbaren Kupplungsstange (15) gebildet und in der als Maschinenhohlspindel (16) gebildeten Bohrspindel (2) geführt ist, dass die Kupplungsstange (15) ein Kupplungsstirnrad (17) und die Maschinenhohlspindel (16) ein Spindelstirnrad (18) aufweisen, und dass die Antriebshülse (8) und gegebenenfalls das Getriebe (9) axial verstellbar im Maschinengehäuse gelagert sind.

7. Bohrvorrichtung nach Anspruch 6, **dadurch gekennzeichnet, dass** die Antriebshülse (8) eine Innenverzahnung (19) aufweist und reversibel von der Spannkonfiguration, in welcher das Kupplungsstirnrad (17) im Eingriff mit der Innenverzahnung (19) steht, in die Bohrkonfiguration, in welcher das Kupplungsstirnrad (17) und das Spindelstirnrad (18) im Eingriff mit der Innenverzahnung (19) stehen, überführbar ist.

8. Bohrvorrichtung nach Anspruch 6, **dadurch gekennzeichnet, dass** die Antriebshülse (8) fest mit dem Kupplungsstirnrad (17) verbunden und reversibel von der Spannkonfiguration, in welcher ein an der Kupplungsstange (15) vorgesehener Zahnkranz (20) außer Eingriff mit einem Spindelzahnkranz (21) der Maschinenhohlspindel (16) steht, in die Bohrkonfiguration, in welcher der Zahnkranz (20) im Eingriff mit dem Spindelzahnkranz (21) steht, überführbar ist.

9. Bohrvorrichtung nach einem der Ansprüche 5 bis 8, **dadurch gekennzeichnet, dass** dem Maschinengehäuse (1) eine die axiale Verstellung des Getriebes (9) und der Antriebshülse (8) bewirkende Stellhülse (22) zugeordnet ist.

10. Bohrvorrichtung nach Anspruch 9, **dadurch gekennzeichnet, dass** der Sensor (29) zur Erfassung der Lage der Antriebshülse (8) und/oder der Stellhülse (22) ausgestaltet ist.
